# EUROPEAN PATENT SPECIFICATION

(11) **EP 1 555 474 B1**
(45) Date of publication and mention of the grant of the patent: **25.07.2012**
(21) Application number: 03794172.1
(22) Date of filing: 02.09.2003
(51) Int. Cl.: F16L 27/11, F25B 41/00

(54) **VIBRATION ABSORBING PIPE**
VIBRATIONSDÄMPFROHR
CONDUIT D'ABSORPTION DE VIBRATIONS

(30) Priority: 03.09.2002 JP 2002257895
(43) Date of publication of application: 20.07.2005
(73) Proprietor: Nichirin Co., Ltd., Kobe-shi, Hyogo 650-0033 (JP)
(72) Inventor: NAKANO, Yoshio, Himeji Kojo in Nichirin Co., Ltd., Himeji-shi, Hyogo 671-0224 (JP); HAMADA, Katsuyuki, Himeji Kojo in Nichirin Co.Ltd., Himeji-shi, Hyogo 671-0224 (JP)
(74) Representative: TBK
(86) International application number: PCT/JP2003/011184
(87) International publication number: WO 2004/023022

(56) References cited:
- WO-A1-00/70257
- GB-A- 719 638
- GB-A- 759 306
- JP-A- 1 126 488
- JP-A- 7 224 975
- JP-A- 9 112 749
- JP-A- 2001 182 872
- NL-A- 7 506 290
- US-A- 3 232 640

## Description

### BACKGROUND OF THE INVENTION

### 1. Field of the Invention

The present invention relates to vibration-absorbing tubes used in refrigerant systems of air conditioners, dehumidifiers, refrigerators, and the like provided with compressors, which generate vibration, or used in other piping systems which generate vibration. More specifically, the present invention relates to vibration-absorbing tubes for carbon dioxide refrigerant systems of automotive air conditioners.

### 2. Description of the Related Art

In general, straight pipes made of aluminum or copper are used for piping for refrigerant systems of air conditioners, dehumidifiers, refrigerators, and the like. These pipes may resonate with the vibration from compressors to generate noise. In order to suppress the resonance, a flexible vibration-absorbing tube having a bellows at the center of the tube is partially used in the piping.

The bellows provided to the flexible vibration-absorbing tube moderately expands and contracts in response to the repeated pressure of refrigerant sent from the compressor and the vibration of the compressor. Thus, the vibration is absorbed to prevent the pipe from resonating. If the bellows wall is thick, its flexibility decreases. Therefore, the bellows cannot sufficiently absorb the vibration because of the difficulty in expansion and contraction. Furthermore, the stress is concentrated in a limited area of the bellows and fatigue failure occurs in a short period of time. Accordingly, thinner bellows wall is fabricated so as to maintain the flexibility. However, too thin bellows wall has reduced pressure resistance.

Many suggestions have been presented in order to enhance the pressure resistance of the bellows while the bellows maintains the flexibility by keeping an appropriate thickness. A non-extensible braided tube or a rubber cover is provided on the periphery of the bellows as reinforcement (see Japanese Unexamined Patent Application Publication Nos. 10-318479, 6-281294, 7-159002, and 2001-182872).

With respect to the refrigerant for air conditioners, dehumidifiers, refrigerators, and the like, there is a strong demand for using natural refrigerant carbon dioxide (CO₂) which is an alternative to the currently used materials, i.e. chlorofluorocarbon which is responsible for global environmental problems such as destroying the ozone layer.

When the CO₂ refrigerant is used, the pressure in the piping for the refrigerant system reaches more than ten times that of when a conventional refrigerant is used.

Therefore, the above-mentioned vibration-absorbing tube merely provided with a reinforcement such as the non-expandable braided tube or rubber cover cannot stand such high pressure, while maintaining effective vibration absorption that prevents the pipe from resonating.

Another suggestion is presented. The bellows is strained in advance by disposing an elastomer or the like between the braid and a joint of the inner tube and between the braid and the bellows, and the bellows is then fastened to a socket by caulking. Thus, concaves of the bellows of the vibration-absorbing tube are partially filled with the elastomer (see PCT Japanese Translation Patent Publication No. 2002-544460).

In this vibration-absorbing tube, only an extremely narrow region, i.e. the ends of the bellows where the socket resides, is filled with the elastomer. Furthermore, the amount of the elastomer at the region is insufficient because the elastomer extends toward the center from the region during the caulking. Therefore, the vibration-absorbing tube cannot have a sufficient durability under such a high pressure.

Japanese Unexamined Patent Application Publication No. 2000-337572 discloses a vibration-absorbing tube having high pressure resistance of the CO₂ refrigerant system. In this vibration-absorbing tube, metal mesh covers the bellows to enhance the strength, and the gap between the bellows and the metal mesh is filled with incompressible plastic to prevent the bellows from wearing caused by the metal mesh.

The vibration-absorbing tube reinforced by covering the bellows with the metal mesh has high pressure resistance, however, it is highly probable that the intended purpose, i.e. the absorption of vibration, is not satisfied. Recently, a layout of piping in an automobile engine compartment has been highly restricted. Consequently, a vibration-absorbing tube, as well as aluminium piping, should be used at a moderately curved state. Since the vibration-absorbing tube having the bellows covered with metal mesh is highly stiff and is less flexible, it is practically impossible to use the vibration-absorbing tube in a curved state for a refrigerant system of an automotive air conditioner.

Further, it is referred to US 3 232 640 A which discloses a multi-wall flexible connector having the features defined in the preamble of claim 1 and to document NL 7506290 .

### SUMMARY OF THE INVENTION

It is an object of the present invention to provide a vibration-absorbing tube that maintains a high durability for long life while being superior in vibration absorption. This vibration-absorbing tube should be able to be partly used in piping for a high-pressured fluid such as a CO₂ refrigerant system even when the vibration-absorbing tube is moderately curved.

This object is achieved by providing a vibration-absorbing tube as defined in claim 1.

Since the outer face of the bellows of the vibration-absorbing tube according to the present invention is covered (filled) with the buffer material from the bottom to a predetermined height of the troughs of the bellows, the bellows exhibits improved vibration absorbency. Consequently, the vibration-absorbing tube can absorb vibration with a broader frequency spectrum and higher energy intensity. In order to yield sufficient vibration absorbency, the bellows should be covered (filled) with the buffer material from the bottom up to a height of 0.5 times or more the height of the ridges of the bellows. Furthermore, instead of a reinforcing metal layer (mesh), since the fiber braid reinforcement is used in the vibration-absorbing tube of the present invention, wearing of the bellows caused by the reinforcing layer is sufficiently prevented. Consequently, the troughs of the bellows are not necessarily required to be entirely filled with the buffer material so that the buffer material thickly covers over the ridges of the bellows. Contrarily, a thicker buffer material decreases pressure resistance, as described in Examples below. Therefore, the thickness of the buffer material from the bottom of the troughs should be 2.0 times or less the height of ridges of the bellows.

When an inner pressure is applied to the bellows, the rate of expansion in the longitudinal direction is larger than that of contraction in the radial direction due to its structure in comparison with a case of a conventional rubber hose used as a vibration-absorbing tube. Since the fiber braid reinforcement of the vibration-absorbing tube of the present invention has a braided angle in the range of 30° to 50°, the resistance against expansion in the longitudinal direction of the bellows increases and the durability is improved. When the braided angle is 50° or less, the durability is sufficiently improved. However, when the braided angle is less than 30°, the expansion in the radial direction of the bellows cannot be prevented. Furthermore, it is difficult to braid such a fiber braid with conventional braiding machines. Therefore the conventional braiding machines are required to change in design. This leads to a high cost. As a result, the braided angle should be in the range of 30° to 50°. Preferably, the braided angle is in the range of 35° to 45°.

In the present invention, a resin or rubber is applied to the fiber braid reinforcement to penetrate and then it is cured. Therefore, even if the vibration-absorbing tube is used in a curved state, the buffer material is not discharged from the troughs of the bellows. As a result, the buffer material does not migrate into gaps between fibers of the fiber braid reinforcement, the fiber displacement of the fiber braid reinforcement does not occur, and the high durability is kept for a long period of time.

Preferably, the resin or rubber that penetrates the fiber braid reinforcement has a low viscosity and readily penetrates the gaps between the fibers during the impregnation, and has comparatively high hardness and low deformation (expansion and contraction) after curing. Examples of the resin include urea resins, melamine resins, phenol resins, epoxy resins, vinyl acetate resins, cyanoacrylate resins, polyurethane resins, maleic acid resins, isocyanate resins, acrylic resins, and a mixture thereof. Examples of the rubber include chlorinated rubbers, acrylic (ACM) rubbers, hydrogenated nitrile rubbers (H-NBRs), epichlorohydrin (ECO) rubbers, butyl rubbers (IIRs), chlorosulfonated polyethylene (CSM) rubbers, chlorinated polyethylene (CM) rubbers, and a mixture thereof.

Examples of fibers for the fiber braid reinforcement include acrylic fibers, novoloid fibers, carbon fibers, polyester fibers, vinylon fibers, silk, nylon fibers, polyamide fibers, polyparaphenyl benzobisoxazole (PBO) fibers, and aramid fibers. In particular, aramid fibers, which are excellent in heat resistance, are preferable because the temperature in the CO₂ refrigerant system reaches about 180°C.

Preferably, the cross section in the axis direction of the bellows is a sequence of Ω-shapes or U-shapes. In such a shape, the bellows yields a flexibility and high absorbency of vibration. The Ω-shaped cross section is superior to the U-shaped cross section in flexibility, so the bellows having the Ω-shaped cross section is the most preferable.

Examples of the buffer material include polyisobutylene, ACM rubbers, H-NBRs, ECO rubbers, IIRs, CSM rubbers, CM rubbers, and a mixture thereof.

The vibration-absorbing tube of the present invention exhibits highly improved whip resistance and pressure resistance, as well as vibration absorbency. Therefore, the vibration-absorbing tube can be disposed partially in piping for CO₂ refrigerant system or the like in a curved state and has a long service life.

Since the vibration-absorbing tube of the present invention has high vibration absorbency, whip resistance, and pressure resistance, the vibration-absorbing tube can be used in piping for a high-pressure fluid such as hydrogen gas, liquefied petroleum gas, and liquefied natural gas, in addition to CO₂ refrigerant system, and exhibits high quality for a long time.

### BRIEF DESCRIPTION OF THE DRAWINGS

Fig. 1 is a partial longitudinal cross-sectional view of the vibration-absorbing tube according to an embodiment of the present invention;
Fig. 2 is a longitudinal cross-sectional view particularly illustrating a part of the vibration-absorbing tube according to an embodiment of the present invention;
Fig. 3 is a longitudinal cross-sectional view particularly illustrating a part of the vibration-absorbing tube according to another embodiment of the present invention;
Fig. 4 schematically illustrates the vibration absorbency test; and
Fig. 5 schematically illustrates the whip resistance test.

### DESCRIPTION OF THE PREFERRED EMBODIMENTS

Preferred embodiments of the present invention will now be described with reference to figures.

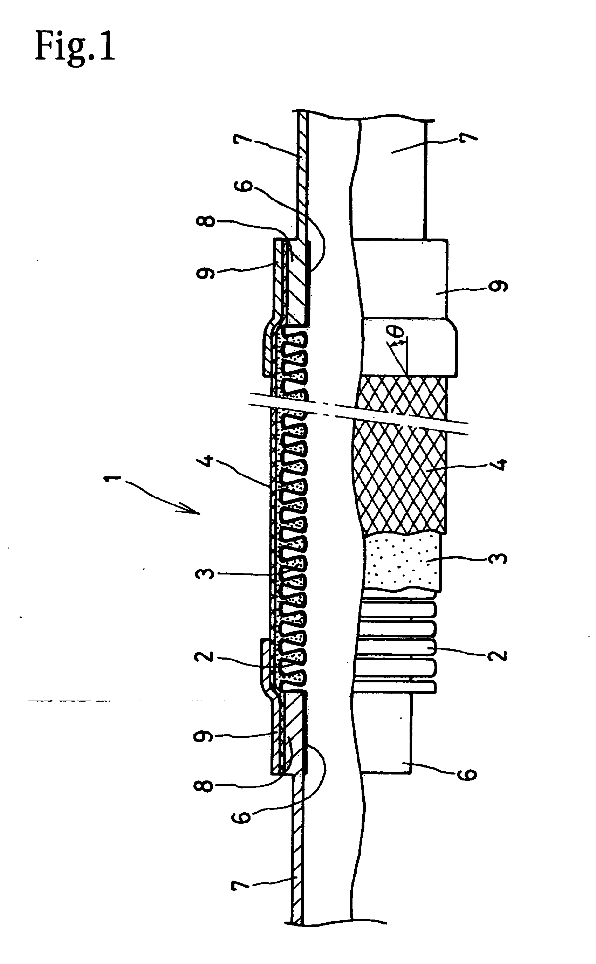

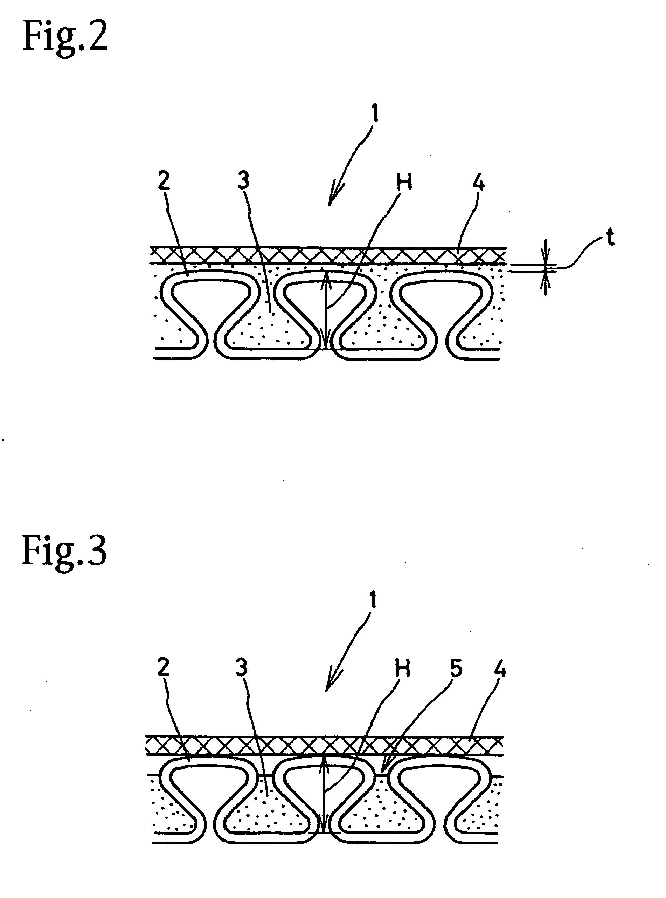

A vibration-absorbing tube according to an embodiment of the present invention is partially disposed in piping for a CO₂ refrigerant system. Namely, the vibration-absorbing tube is disposed in series between pipes made of aluminium, stainless steel, or the like constituting the piping. As shown in Figs. 1 and 2, the vibration-absorbing tube 1 includes a bellows 2, straight pipe units 6 integrated with both ends of the bellows 2, and nipples 7 fixed to the straight pipe units 6.

The bellows 2 has a plurality of ridges each independently forming a ring. The cross section (longitudinal section) in the axial direction of these ridges is usually a U-shape (not shown) or an Ω-shape (see Figs. 1 and 2). The U-shaped bellows yields a high durability against expansion and contraction, and the Ω-shaped bellows yields a further higher durability.

Preferably, troughs of the bellows 2 have an external diameter (namely, external diameter of the original pipe) of 3 to 13 mm. The diameter is determined in this range according to the fluid volume and pressure in a piping provided with the vibration-absorbing tube 1, the mechanical quality and thickness of the material used for the bellows 2, and so on.

Preferably, the thickness of the bellows 2 is determined to be in the range of 0.1 to 0.3 mm according to the external diameter of the trough of the bellows 2 and the mechanical quality of the material.

A small number of the ridges of the bellows 2 decreases vibration absorbency. A large number of the ridges requires a long vibration-absorbing tube 1; hence, the cost for forming the bellows 2 increases and the installation of the vibration-absorbing tube 1 to the refrigerant system is restricted. The number of the ridges of the bellows 2 is determined within the range from about 10 to about 300 according to the mechanical quality and thickness of the material of the bellows 2, the external diameter of the trough, working and fluctuating pressures at the portion where the bellows 2 is installed, and so on.

Preferably, the material of the bellows 2 is austenite stainless steel. For example, austenite stainless steel SUS304, SUS310, and SUS316 are preferable. In particular, SUS316L stainless steel, excellent in mechanical properties such as tensile strength and ductility capacity and also having a high corrosion resistance, is most preferable.

The bellows 2 of the vibration-absorbing tube 1 of the present invention can be formed by a known single-ridge hydroforming.

After the forming the bellows 2, the nipples 7 (each having an integrated base-ring 8 at the end) are formed by hard soldering on outer faces of both ends of the bellows 2, and then the outer face of the bellows 2 is covered (filled) with a buffer material 3. In the method for covering (filling) the outer face of the bellows 2 with the buffer material 3, a pipe having an inner diameter of approximately the same as or slightly larger than the outer diameter of the bellows 2 and being split into two pieces in the longitudinal direction can be used: each piece of the pipe is filled with a sufficient amount of the buffer material 3, for example, rubber; the bellows 2 is sandwiched between these pieces of the pipe and these are left for a predetermined period of time for hardening the buffer material 3; and then the pieces of the pipe are removed. In this method, all the troughs of the bellows 2 are filled with the buffer material 3 and an excess amount of buffer material 3 spilling over the height H of the ridges covers the entire outer face of the bellows 2. When the thickness t of the buffer material 3 covering the outer face of the bellows 2 is large, the pressure durability decreases. Therefore, the thickness of the buffer material 3 covering the outer face is required to be as small as possible.

In the present invention, that the outer face of the bellows 2 is covered (filled) with the buffer material 3 does not mean that the entire outer face including the ridges is covered with the buffer material 3. The troughs should be filled with the buffer material 3 from the bottom to a predetermined height of the troughs. Furthermore, substantially all of the troughs disposed in the axial direction of the bellows 2 must be filled with the buffer material 3 up to the predetermined level. Preferably, all of the troughs are filled with the buffer material 3 up to substantially the same level of the troughs.

After the outer face of the bellows 2 is covered (filled) with the buffer material 3, as shown in Figs. 1 and 2, the circumference of the bellows 2 is covered with a fiber braid reinforcement 4. The fiber braid reinforcement 4 is a braided tubular material composed of, for example, acrylic fibers, novoloid fibers, carbon fibers, polyester fibers, vinylon fibers, silk, nylon fibers, polyamide fibers, or aramid fibers. The braided angle θ (which is determined by the tilt angle of the fiber from the axis of the bellows) is in the range of 30° to 50°, more preferably, in the range of 35° to 45°C, which is smaller than the range of 54.8° to 56.8° for conventional fiber braid reinforcements of rubber hoses.

After the fiber braid reinforcement 4 is braided, the fiber braid reinforcement 4 is impregnated with a resin, for example, with an epoxy resin and be left for a predetermined period of time for curing the resin. The resin can protect the fiber braid reinforcement 4 from fiber displacement even when the vibration-absorbing tube 1 is used in a curved state. Therefore, the bellows 2 can maintain the high durability for a long period of time.

Each end of the fiber braid reinforcement 4 is fixed by clamping with a reinforcement ring (clamping attachment) 9 on a base ring 8 integrated with the end of the nipple 7, and thus the vibration-absorbing tube 1 of the present invention is fabricated.

The effect of the present invention will now be verified with reference to examples, wherein Examples 1 and 2 are outside the scope of the claims.

### [Example 1]

A bellows 2 having a length of 374 mm and an external diameter of 11.2 mm (having a height H of the ridge of the bellows of 1.63 mm) was made from an original stainless steel pipe having an external diameter of 7.94 mm and a thickness of 0.18 mm by a hydraulic forming process. A stainless steel nipple 7 having a length of 50 mm and a thickness of 1.03 mm was formed on the outer face of each end of the bellows 2 by hard soldering. The outer face of the bellows 2 was covered (filled) with an acrylic rubber, which functions as a buffer material 3, according to a process using the above-mentioned pipe split into two pieces. The inner diameter of the pipe split into two pieces was 0.2 mm larger than the external diameter of the bellows 2, so that the acrylic rubber covering the outer face over the height H of ridges of the bellows 2 had a thickness t of 0.1 mm, i.e. 1.06 times the height H of the ridge of the bellows. A fiber braid reinforcement 4 was formed on the outer face of the bellows by braiding aramid fiber at a braided angle of 40°. The fiber braid reinforcement 4 was not impregnated with rubber in these Examples (see Figs. 1 and 2).

### [Example 2]

After covering (filling) the outer face of the bellows 2 with an acrylic rubber as in Example 1, the acrylic rubber covering the outer face over the height H of ridges of the bellows 2 was slit in the axis direction of the bellows 2 and was then peeled from the outer face of the bellows 2 so that the acrylic rubber, i.e. the buffer material 3, remained only at the portions of the troughs lower than the narrowest parts 5 between the adjacent Ω-shaped ridges. The fiber braid reinforcement 4 was formed by braiding aramid fiber at a braided angle of 40° on the outer face of the bellows 2. The fiber braid reinforcement 4 was not impregnated with rubber in this Example (see Fig. 3).

### [Example 3]

As in Example 1, bellows 2 each having a length of 374 mm and an external diameter of 11.2 mm (having a height H of ridge of the bellows is 1.63 mm) were made from an original stainless steel pipe having an external diameter of 7.94 mm and a thickness of 0.18 mm by a hydraulic forming process. A stainless steel nipple 7 having a length of 50 mm and a thickness of 1.03 mm was formed on each outer end face of each bellows 2 by hard soldering. The outer face of the bellows 2 was covered (filled) with an acrylic rubber, which functions as a buffer material 3, according to the process using the above-mentioned pipe split into two pieces. In this Example, the inner diameters of the pipes split into two pieces were 0.2 to 4 mm larger than the external diameter of the bellows 2, so that the acrylic rubber covering the outer face over the height H of ridges of each bellows 2 had a thickness t of 0.1 to 2 mm, i.e. about 1.06 to 2.23 times the height H of the ridges of the bellows. A fiber braid reinforcement 4 was formed on each outer face of the bellows by braiding aramid fiber at braided angles of 45° to 35°. An acrylic rubber dissolved in a solvent was applied to each fiber braid reinforcement 4 to sufficiently penetrate the fiber braid reinforcement 4, and was then cured by heating at 180°C for 30 minutes (see Figs. 1 and 2).

### [Comparative Example 1]

As an equivalent of a known vibration-absorbing tube, a bellows was formed as in Example 1, and a stainless steel nipple was formed on the outer face of each end of the bellows by hard soldering. Without covering with a buffer material, a fiber braid reinforcement was formed directly by braiding on the outer face of the bellows at a braided angle of 54.7°. The fiber braid reinforcement was not impregnated with a rubber.

### [Comparative Example 2]

A vibration-absorbing tube was formed as in Comparative Example 1, but the fiber braid reinforcement was formed by braiding at a braided angle of 40° instead of 54.7° in Comparative Example 1.

Vibration absorbency, whip resistance, and pressure resistance were evaluated for several vibration-absorbing tubes fabricated in Examples 1 to 3 and Comparative Examples 1 and 2, respectively.

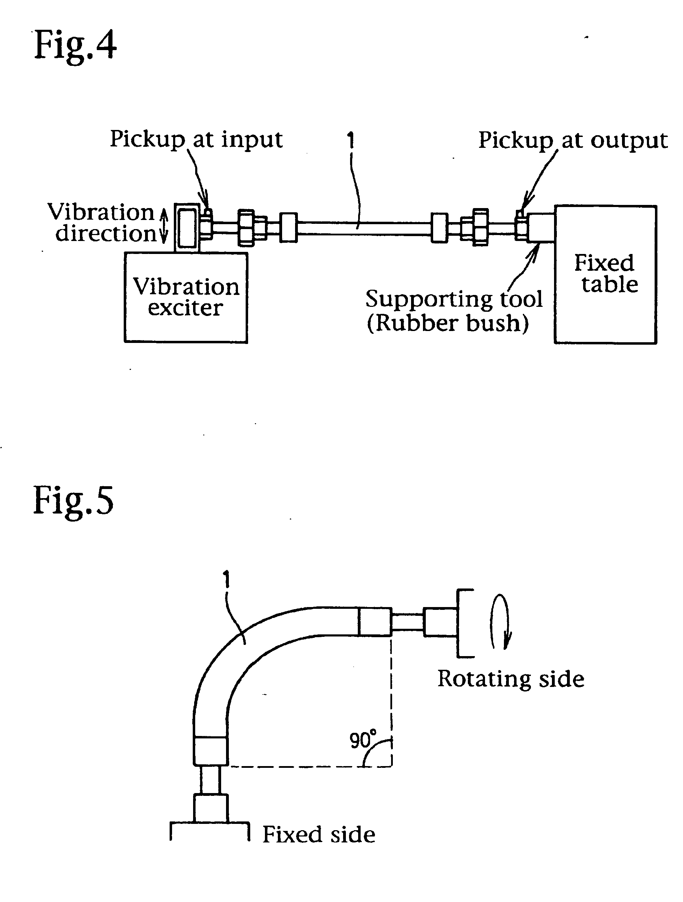

These evaluation tests were conducted under the following conditions:
1. Vibration absorbency test (see Fig. 4)
   Setting of the vibration-absorbing tubes: straight
   Inner pressure (gauge pressure): 11 MPa (constant)
   Temperature: ambient
   Excitation direction: vertical
   Vibration amplitude: ±0.06 mm
   Frequency: from 40 Hz to 450 Hz
   cycle: 10 minnute
2. Whip resistance test (see Fig. 5)
   Setting of the vibration-absorbing tubes: curved up to 90° with a radius of 220 mm
   Inner pressure (gauge pressure): 11 MPa (constant)
   Temperature: ambient
   Vibration amplitude: ±15 mm
   Speed of rotation: 450 rpm
3. Pressure resistance test (not shown in the figure)
   Setting of the vibration-absorbing tubes: turned up by 180° with a radius of 90 mm
   Inner pressure (gauge pressure): 0 to 15 MPa or 0 to 21 MPa
   Temperature: 130°C
   Repeating speed (Frequency): 30 cpm (0.5 Hz)
   Working fluid: refrigerant oil

The results are shown in Table I. The vibration absorbency is expressed by the average of differences (dB) calculated from vibration intensities measured through pickups at both the input and at the output for each frequency in the vibration absorbency test. A larger absolute value means a higher vibration absorbency. The whip resistance is expressed by a period of time when causing deformation or breakage of vibration-absorbing tubes in the whip resistance test. The pressure resistance is expressed by the number of pressure application cycles until causing breakage of vibration-absorbing tubes in the pressure resistance test. In Table I, "A" in Examples 1 to 3 means that the performance is highly improved compared with that of the conventional vibration-absorbing tube, and "B" in Examples 1 to 3 means the performance is the same as or inferior to that of the conventional vibration-absorbing tube.

The results of Samples 3 and 4 shown in Table I exhibit that vibration-absorbing tubes, each including a buffer material and a fiber braid reinforcement , were highly improved in vibration absorbency, whip resistance, and pressure resistance compared with Comparative Example 1 (Sample 1). With comparison between Samples 3 and 4, the vibration-absorbing tube including the buffer material having a smaller thickness of a range defined in the present invention was highly improved in pressure resistance between 0 and 21 MPa, though the vibration absorbency slightly decreased.

The results of Samples 5, 6, 9, and 10 exhibit that vibration-absorbing tubes, each including a fiber braid reinforcement filled with rubber according to the present invention, were highly improved in vibration absorbency, whip resistance, and pressure resistance compared with Comparative Example 1 (Sample 1). In particular, with comparison between Samples 3 and 4, it was observed that the vibration-absorbing tube including the fiber braid reinforcement filled with rubber was highly improved in pressure resistance between 0 and 21 MPa, though the vibration absorbency slightly decreased.

The pressure resistance between 0 and 15 MPa was improved in Sample 2. However, the result of Sample 2 exhibits that a vibration-absorbing tube with no buffer material was not improved in vibration absorbency and whip resistance, although the vibration-absorbing tube included a fiber braid reinforcement with a braided angle of a range defined in the present invention, which was smaller than that of comparative Example 1 (Sample 1). The vibration absorbency was improved in Sample 7. However, the result of Sample 7 exhibits that the vibration-absorbing tube including the buffer material of an excess thickness over a range defined in the present invention reduced the whip resistance and the pressure resistance, although the vibration-absorbing tube included a fiber braid reinforcement with a braided angle of a range defined in the present invention and also the fiber braid reinforcement was impregnated with rubber. The whip resistance was improved in Sample 8. However, the result of Sample 8 exhibits that the vibration-absorbing tube including the fiber braid reinforcement with a braided angle of outside of the range defined in the present invention was not sufficiently improved in vibration absorbency and pressure resistance, although the buffer material had a thickness of a range defined in the present invention and was filled with rubber.

Reinforcing layers after the tests showed good performance without wearing in all of the samples.

**Table I**

| | Sample | Buffer Material | | Fiber braid reinforcement | | Vibration absorbency (dB) | Whip resistance (h) | Pressure resistance [0 to 15 MPa] (time) | Pressure resistance [0 to 21 MPa] (time) |
|---|---|---|---|---|---|---|---|---|---|
| | | Thickness from the ridge of bellows (mm) | Height of buffer material relative to H (mm) | Braided angle (°) | Impregnated with rubber | | | | |
| Comparative Example 1 | 1 | 0 | 0 | 54.7 | Not impregnated | -6-9: B | 0.1-0.2: B | 70,000: B | 26,000: B |
| Comparative Example 2 | 2 | 0 | 0 | 40.0 | Not impregnated | -7.1: B | 0.1-0.2: B | > 200,000: A | 67,000: B |
| Example 1 | 3 | 0.1 | 1.06H | 40.0 | Not impregnated | -10.8: A | > 200: A | > 200,000: A | 30,000: B |
| Example 2 | 4 | Under the narrowest parts of the bellows | 0.67H | 40.0 | Not impregnated | -9.5: A | > 200: A | > 200,000: A | > 100,000: A |
| | 5 | 0.1 | 1.06H | 40.0 | Impregnated | -9.3: A | > 200: A | > 200,000: A | > 100,000: A |
| Example 3 | 6 | 1.0 | 1.61H | 40.0 | Impregnated | -9.0: A | > 200: A | > 200,000: A | > 100,000: A |
| | 7 | 2.0 | 2.23H | 40.0 | Impregnated | -9.1:A | 2-3: B | 100,000: B | 60,000: B |
| | 8 | 0.1 | 1.06H | 54.7 | Impregnated | -8.1:A | > 200: A | 90,000: B | 50,000: B |
| | 9 | 0.1 | 1.06H | 45.0 | Impregnated | -8.9: A | > 200: A | > 200,000: A | > 100,000: A |
| | 10 | 0.1 | 1.06H | 35.0 | Impregnated | -10.1: A | > 200: A | > 200,000: A | > 100,000: A |

## Claims

1. A vibration-absorbing tube comprising a bellows (2) composed of a thin metal, a buffer material (3) and a fiber braid reinforcement (4) covering the bellows (2), wherein the outer face of the bellows (2) is covered with the buffer material (3) from the bottom of all troughs of the bellows (2) to a height that is 0.5 to 2.0 times the height of ridges of the bellows (2),
**characterized in that**
the fiber braid reinforcement has a braided angle of 30° to 50°, and
gaps in the fiber braid reinforcement (4) are impregnated with a curable resin or rubber composition.

2. The vibration-absorbing tube according to claim 1, wherein the resin composition comprises at least one resin selected from the group consisting of urea resins, melamine resins, phenol resins, epoxy resins, vinyl acetate resins, cyanoacrylate resins, polyurethane resins, maleic acid resins, isocyanate resins, and acrylic resins, or wherein the rubber composition comprises at least one rubber selected from the group consisting of chlorinated rubbers, acrylic rubbers, hydrogenated nitrile rubbers, epichlorohydrin rubbers, butyl rubbers, chlorosulfonated polyethylene rubbers, and chlorinated polyethylene rubbers.

3. The vibration-absorbing tube according to claim 1 or 2, wherein the fibers constituting the fiber braid reinforcement (4) are selected from the group consisting of acrylic fibers, novoloid fibers, carbon fibers, polyester fibers, vinylon fibers, silk, nylon fibers, polyamide fibers, polyparaphenylene benzobisoxazole fibers, and aramid fibers.

4. The vibration-absorbing tube according to any one of claims 1 to 3, wherein the cross section of the bellows (2) has a sequence of Q-shapes or U-shapes.

5. The vibration-absorbing tube according to any one of claims 1 to 4, wherein the buffer material (3) is a rubber composition comprising at least one rubber selected from the group consisting of polyisobutylene, acrylic rubbers, hydrogenated nitrile rubbers, epichlorohydrin rubbers, butyl rubbers, chlorosulfonated polyethylene rubbers, and chlorinated polyethylene rubbers.

6. The vibration-absorbing tube according to any one of claims 1 to 5, wherein the buffer material (3) covers the outer face of the bellows (2) over the height (H) of the ridges of the bellows (2).

7. Use of the vibration-absorbing tube according to any one of claims 1 to 6 in piping for a carbon dioxide refrigerant system, hydrogen gas, liquefied petroleum gas, chlorofluorocarbon refrigerant, or liquefied natural gas.

## Patentansprüche

1. Vibrationsdämpfender Schlauch mit einem aus dünnem Metall bestehenden Balg (2), einem Puffermaterial (3) und einer den Balg (2) bedeckenden Fasergeflechtverstärkung (4), wobei die Außenseite des Balgs (2) vom Boden aller Mulden des Balgs (2) aus bis auf eine Höhe, die 0,5 bis 2,0 mal so groß wie die Höhe von Rücken des Balgs (2) ist, mit dem Puffermaterial (3) bedeckt ist,
**dadurch gekennzeichnet, dass**
die Fasergeflechtverstärkung einen Flechtwinkel von 30° bis 50° hat und
Lücken in der Fasergeflechtverstärkung (4) mit einer härtbaren/vernetzbaren Harz- oder Kautschukzusammensetzung imprägniert sind.

2. Vibrationsdämpfender Schlauch nach Anspruch 1, wobei die Harzzusammensetzung mindestens ein Harz umfasst, das aus der Gruppe gewählt ist, die aus Harnstoffharzen, Melaminharzen, Phenolharzen, Epoxidharzen, Vinylacetatharzen, Cyanoacrylatharzen, Polyurethanharzen, Maleinsäureharzen, Isocyanatharzen und Acrylharzen besteht, oder wobei die Kautschukzusammensetzung mindestens einen Kautschuk umfasst, der aus der Gruppe gewählt ist, die aus Chlorkautschuken, Acrylkautschuken, hydrierten Nitrilkautschuken, Epichlorhydrinkautschuken, Butylkautschuken, chlorsulfonierten Polyethylenkautschuken und chlorierten Polyethylenkautschuken besteht.

3. Vibrationsdämpfender Schlauch nach Anspruch 1 oder 2, wobei die Fasern, die die Fasergeflechtverstärkung (4) bilden, aus der Gruppe gewählt sind, die aus Acrylfasern, Novoloidfasern, Kohlefasern, Polyesterfasern, Vinylonfasern, Seide, Nylonfasern, Polyamidfasern, Polyparaphenylen-benzobisoxazol-Fasern und Aramidfasern besteht.

4. Vibrationsdämpfender Schlauch nach einem der Ansprüche 1 bis 3, wobei der Querschnitt des Balgs (2) eine Folge von Ω-Formen oder U-Formen hat.

5. Vibrationsdämpfender Schlauch nach einem der Ansprüche 1 bis 4, wobei das Puffermaterial (3) eine Kautschukzusammensetzung ist, die mindestens einen Kautschuk umfasst, der aus der Gruppe ausgewählt ist, die aus Polyisobutylen, Acrylkautschuken, hydrierten Nitrilkautschuken, Epichlorhydrinkautschuken, Butylkautschuken, chlorsulfonierten Polyethylenkautschuken und chlorierten Polyethylenkautschuken besteht.

6. Vibrationsdämpfender Schlauch nach einem der Ansprüche 1 bis 5, wobei das Puffermaterial (3) die Außenseite des Balgs (2) über die Höhe (H) der Rücken des Balgs (2) hinaus bedeckt.

7. Verwendung des vibrationsdämpfenden Schlauchs nach einem der Ansprüche 1 bis 6 bei der Verschlauchung für ein Kohlendioxid-Kühlsystem, Wasserstoffgas, verflüssigtes Erdölgas, Fluorchlorkohlenwasserstoff-Kühlmittel oder verflüssigtes Erdgas.

## Revendications

1. Tube d'absorption de vibrations, comprenant un soufflet (2) composé d'un métal mince, d'un matériau tampon (3) et d'un renfort de tresse de fibres (4) recouvrant le soufflet (2), dans lequel la face extérieure du soufflet (2) est recouverte du matériau tampon (3) du fond de tous les creux du soufflet (2) à une hauteur qui est de 0,5 à 2,0 fois la hauteur des saillies du soufflet (2),
**caractérisé en ce que**
le renfort de tresse de fibres a un angle de tressage de 30° à 50°, et
des espaces dans le renfort de tresse de fibres (4) sont imprégnés d'une résine durcissable ou d'une composition de caoutchouc.

2. Tube d'absorption de vibrations selon la revendication 1, dans lequel la composition de résine comprend au moins une résine choisie dans le groupe constitué par les résines d'urée, les résines de mélamine, les résines phénoliques, les résines époxy, les résines d'acétate de vinyle, les résines à base de cyanoacrylate, les résines polyuréthanes, les résines d'acide maléique, les résines isocyanates, et les résines acryliques, ou dans lequel la composition de caoutchouc comprend au moins un caoutchouc choisi dans le groupe constitué de caoutchoucs chlorés, de caoutchoucs acryliques, de caoutchoucs nitrile hydrogénés, de caoutchoucs d'épichlorhydrine, de caoutchoucs butyle, de caoutchoucs de polyéthylène chlorosulfoné, et de caoutchoucs de polyéthylène chloré.

3. Tube d'absorption de vibrations selon la revendication 1 ou 2, dans lequel les fibres constituant le renfort de tresse de fibres (4) sont choisies dans le groupe constitué de fibres acryliques, de fibres novoloïd, de fibres de carbone, de fibres de polyester, de fibres de vinylon, de soie, de fibres nylon, de fibres polyamide, de fibres de poly(paraphénylène benzobisoxazole), et de fibres aramide.

4. Tube d'absorption de vibrations selon l'une quelconque des revendications 1 à 3, dans lequel la coupe transversale du soufflet (2) présente une séquence de formes en Ω ou de formes en U.

5. Tube d'absorption de vibrations selon l'une quelconque des revendications 1 à 4, dans lequel le matériau tampon (3) est une composition de caoutchouc comprenant au moins un caoutchouc choisi dans le groupe constitué de polyisobutylène, de caoutchoucs acryliques, de caoutchoucs nitrile hydrogénés, de caoutchoucs d'épichlorhydrine, de caoutchoucs butyle, de caoutchoucs de polyéthylène chlorosulfoné, et de caoutchoucs de polyéthylène chloré.

6. Tube d'absorption de vibrations selon l'une quelconque des revendications 1 à 5, dans lequel le matériau tampon (3) recouvre la face extérieure du soufflet (2) au-dessus de la hauteur (H) des saillies du soufflet (2).

7. Utilisation du tube d'absorption de vibrations selon l'une quelconque des revendications 1 à 6 dans une tuyauterie d'un système de réfrigération au dioxyde de carbone, d'hydrogène gazeux, du gaz de pétrole liquéfié, d'un réfrigérant au chlorofluorocarbure ou d'un gaz naturel liquéfié.
